# EUROPEAN PATENT SPECIFICATION

(11) **EP 3 211 705 B1**
(45) Date of publication and mention of the grant of the patent: **16.05.2018**
(21) Application number: 16197890.3
(22) Date of filing: 09.11.2016
(51) Int. Cl.: H01M 8/2485, H01M 8/2475, H01M 8/2425, H01M 8/04007

(54) **FUEL CELL MODULE**
BRENNSTOFFZELLENMODUL
MODULE DE PILE À COMBUSTIBLE

(30) Priority: 24.02.2016 JP 2016033120
(43) Date of publication of application: 30.08.2017
(73) Proprietor: AISIN SEIKI KABUSHIKI KAISHA, Aichi 448-8650 (JP)
(72) Inventor: ENDO, Satoshi, Kariya-shi, Aichi 448-8650 (JP); KUWABA, Koichi, Kariya-shi, Aichi 448-8650 (JP)
(74) Representative: TBK

(56) References cited:
- EP-A1- 2 899 787
- EP-A1- 3 076 467
- JP-A- 2008 034 205
- JP-A- 2010 238 430

## Description

### TECHNICAL FIELD

This disclosure generally relates to a fuel cell module.

### BACKGROUND DISCUSSION

A known fuel cell module disclosed in JP 2011 96388 A includes a fuel cell, a cathode gas introduction member, and an insulating member. The fuel cell includes plural cells that are stacked with one another. The cathode gas introduction member introduces a cathode gas to a lower position of the fuel cell. The insulating member is spaced apart from a first side surface of the fuel cell, the first side surface that is disposed opposite to a second side surface of the fuel cell, the second side surface that is disposed at a side where the cathode gas introduction member is disposed.

The cathode gas introduced to the lower portion of the fuel cell via the cathode gas introduction member flows in a cathode gas flow passage that is disposed between the fuel cells from the lower portion to an upper portion of the fuel cell. The cathode gas is reacted with an anode gas at each of the fuel cells, the anode gas supplied to the fuel cells, to generate an electric power.

The fuel cell generates heat by an electrochemical reaction of the cathode gas and the anode gas. The temperature level of the fuel cell increases toward the upper portion from the lower portion of the fuel cell. This is because the cathode gas is heated by the fuel cell and the temperature level of the cathode gas gradually increases in accordance with the flow of the cathode gas from the lower portion to the upper portion of the fuel cell within the cathode gas flow passage, and the upper portion of the fuel cell is heated by the heated cathode gas. As such, because the temperature level of the fuel cell is higher toward the upper portion of the fuel cell from the lower portion of the fuel cell, the temperature level of the upper portion of the fuel cell may increase, and the durability of the fuel cell may be reduced.

Another known fuel cell module disclosed in JP 2010 238430 A includes the features set out in the preamble of claim 1.

A need exists for a fuel cell module that may enhance durability of a fuel cell.

### SUMMARY

According to an aspect of this disclosure, a fuel cell module includes the features set out in claim 1.

According to the above aspect, the cathode gas flowing in the first flow passage flows in the second end of the cathode gas flow passage via the first flow block member that is provided at the second end of the cell relative to an intermediate position of the cell in the second direction. Thus, the second end of the fuel cell is cooled by the cathode gas that flows in the first flow passage and that has the temperature level lower than the temperature level of the cathode gas flowing in the cathode gas flow passage. Accordingly, because the temperature level of the second end of the fuel cell is prevented from increasing higher than the first end of the fuel cell, the durability of the fuel cell may be enhanced.

According the above aspect, the temperature level of the second end of a cell disposed in an intermediate position of the fuel cell in the first direction, the intermediate position including a temperature level higher than the opposing end portions of the cell, is prevented from increasing by the first flow block member. Because the temperature level of the opposing ends of the cell is lower than the intermediate position of the cell in the first direction, the temperature level of the cell in the first direction comes to be uniform. Thus, the temperature level of the cell is prevented from exceeding the heat resistant temperature at a specific part of the cell, and the average temperature level of the fuel cell that is in operation may increase while maintaining the durability of the fuel cell. As a result, the power generation efficiency of the fuel cell may be enhanced.

According to another aspect of this disclosure, the fuel cell module further includes a second flow passage being formed between the fuel cell and the cathode gas introduction member, the second flow passage communicating with the cathode gas flow passage, the second flow passage sending the cathode gas from the first end to the second end, and a second flow block member being provided within the second flow passage at the second end of the second flow passage in the second direction, the second flow block member blocking the cathode gas flowing in the second flow passage.

Accordingly, the second end of the fuel cell is cooled by the cathode gas that flows in the second flow passage and that has the temperature level lower than the temperature level of the cathode gas flowing in the cathode gas flow passage. Thus, the temperature level of the second end of the fuel cell is prevented from increasing higher than the temperature level of the first end of the fuel cell. As a result, temperature level of the fuel cell in the second direction comes to be uniform.

According to still another aspect of this disclosure, the first flow block member and the second flow block member each is made from a flocculent member being made of fiber including heat resistant properties.

Accordingly, being the flocculent member being made of fiber including the heat resistant properties, the first and second flow block members include flexibility. Thus, the first and second flow block members made of fiber may closely come in contact with the first and second wall members of the insulating member and the cell.

According to another aspect of this disclosure, the first flow block member and the second flow block member each is provided over a whole length of an intermediate portion of the fuel cell other than opposing end portions of the fuel cell in the first direction.

Accordingly, the temperature level of the second end of the cell disposed in the intermediate position of the cell in the first direction, the intermediate position including the temperature level higher than the opposing end portions of the fuel cell, is prevented from increasing by the first and second flow block members. Because the temperature level of the opposing ends of the cell is lower than the intermediate position of the cell in the first direction, the temperature level of the cell in the first direction comes to be uniform. Thus, the temperature level of the cell is prevented from exceeding the heat resistant temperature at a specific part of the cell, and the average temperature level of the fuel cell that is in operation may increase while maintaining the durability of the fuel cell. As a result, the power generation efficiency of the fuel cell may be enhanced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a lateral cross sectional view illustrating a fuel cell module;
Fig. 2 is a side cross sectional view illustrating the fuel cell module;
Fig. 3 is a top view illustrating an inside (specifically, an evaporation portion and a reforming portion) of the fuel cell module shown in Figs. 1 and 2;
Fig. 4 is a top view illustrating the inside (specifically, a fuel cell) of the fuel cell module shown in Figs. 1 and 2;
Fig. 5 is a cross sectional view of the fuel cell taken along line V-V in Fig.1;
Fig. 6 is a cross sectional view of the fuel cell taken along line VI-VI in Fig. 1;
Fig. 7 is a lateral cross sectional view illustrating the fuel cell module in a state where a cathode gas flows in the fuel cell module:
Fig. 8 is a cross sectional view of a fuel cell according to an embodiment disclosed here; and
Fig 9 is a lateral cross sectional view of a fuel cell module according to another example.

### DETAILED DESCRIPTION

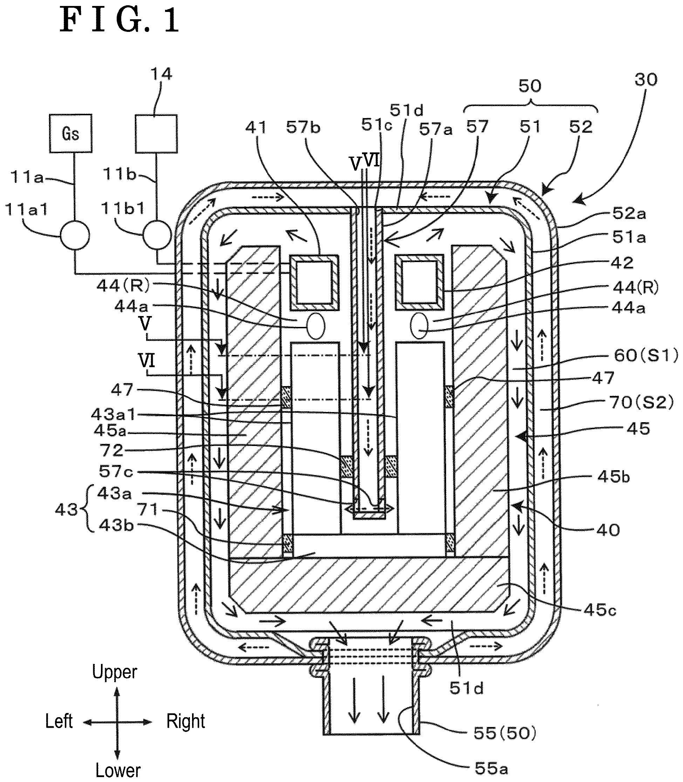

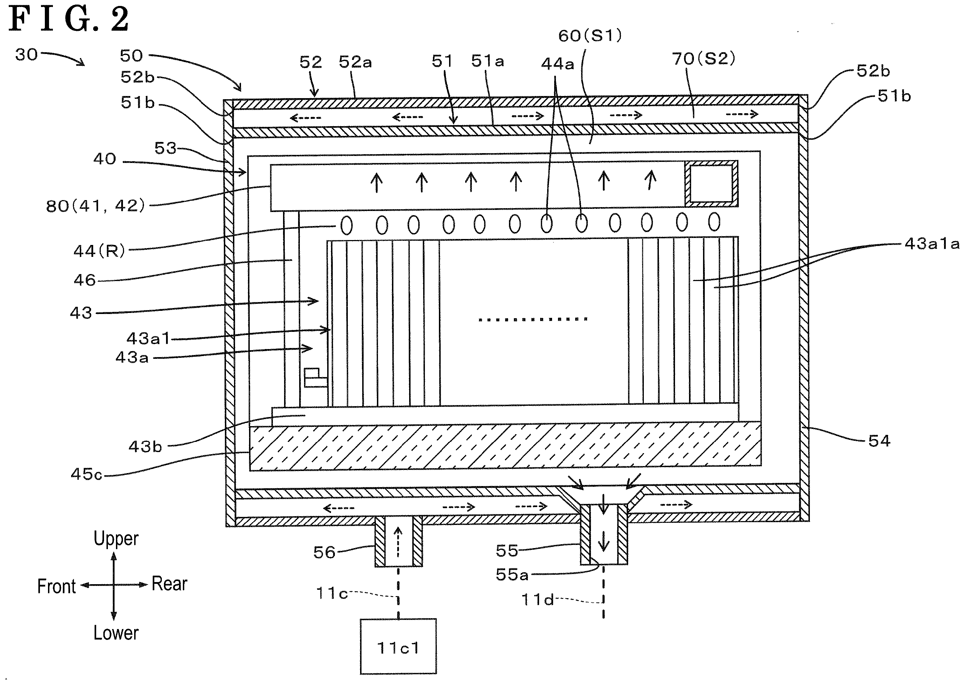

A fuel cell module will hereunder be explained with reference to Figs. 1 to 7, which is not within the terms of the claims but useful for understanding the invention. A fuel cell module 30 at least includes a fuel cell device 43. The fuel cell module 30 is supplied with a source material for reforming (source material), a reforming water, and a cathode gas. Specifically, as shown in Fig. 1, a source material supply pipe 11a includes one end that is connected to a supply source Gs to be supplied with the source material, and the other end that is connected to the fuel cell module 30. The source material supply pipe 11a includes a source material pump 11a1. A water supply pipe 11b includes one end that is connected to a water tank 14 to be supplied with the reforming water, and the other end that is connected to the fuel cell module 30. The water supply pipe 11b includes a reforming water pump 11b1. As shown in Fig. 2, a cathode gas supply pipe 11c includes one end that is connected to a cathode gas blower 11c1 to be supplied with the cathode gas, and the other end that is connected to the fuel cell module 30.

The fuel cell module 30 corresponds to a solid oxide fuel cell. As shown in Figs. 1 and 2, the fuel cell module 30 includes a power generation portion 40, an exterior 50, a first gas flow passage 60, and a second gas flow passage 70. The exterior 50 contains the power generation portion 40. For convenience of description, an upper position and a lower position in Fig. 1 correspond to an upper position and a lower position of the fuel cell module 30, respectively. A left and right correspond to a left position and a right position of the fuel cell module 30, respectively. A front and rear when viewed on a paper correspond to a rear and a front of the fuel cell module, respectively. In Figs. 1 to 4, arrows show directions. A first direction corresponds to a front-rear direction. A second direction corresponds to an upper-lower direction orthogonal to the first direction corresponding to the front-rear direction.

As shown in Fig. 1, the power generation portion 40 includes an evaporation portion 41, a reforming portion 42, the fuel cell device 43, a combustion space R serving as a combustion portion 44, and an insulating member 45 (a wall member). The evaporation portion 41 and the reforming portion 42 are disposed above the fuel cell device 43. The combustion space R (the combustion portion 44) is disposed between a set of the evaporation portion 41 and the reforming portion 42, and the fuel cell device 43.

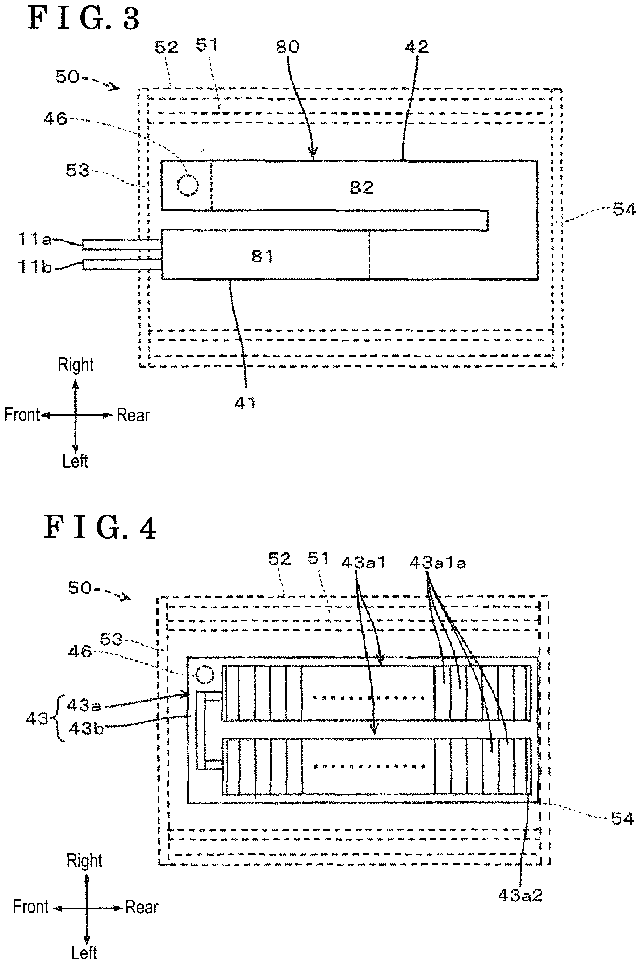

As shown in Fig. 3, the evaporation portion 41 is connected to the other end of the source material supply pipe 11a and the other end of the water supply pipe 11b. Heated by a combustion gas, the evaporation portion 41 evaporates a condensed water supplied as reforming water from the water tank 14 via the water supply pipe 11b, and generates a water vapor (a reforming water vapor) to be discharged. The evaporation portion 41 preheats the source material supplied via the source material supply pipe 11a. The evaporation portion 41 mixes the water vapor (the reforming water vapor) generated by evaporating the reforming water (the condensed water) and the preheated source material, and discharges the mixed material to the reforming portion 42. The source material corresponds to gaseous fuel (gaseous fuel for reforming) such as natural gas and liquefied petroleum gas (LP gas), and liquid fuel (liquid fuel for reforming) such as kerosene, gasoline (petrol) and methanol, for example. In the present example, the source material corresponds to the natural gas having methane as a main component.

The reforming portion 42 generates the reforming gas (i.e., serving as an anode gas, hereinafter referred to as an anode gas) by the source material and the water vapor (the reforming water vapor). Specifically, by being heated with the combustion gas and is supplied with heat desired for water vapor reforming reaction, the reforming portion 42 generates and discharges the anode gas from mixed gas (source material, water vapor for reforming) supplied from the evaporation portion 41. The inside of the reforming portion 42 is filled with a catalyst, for example, Ru catalyst or a Ni catalyst. The mixed gas reacts by means of the catalyst so as to be reformed, thereby generating a hydrogen gas and a carbon monoxide gas (so-called a water vapor reforming reaction, shown in Chemical formula 1). At the same time, carbon monoxide generated by the water vapor reforming reaction and the water vapor are reacted with each other to generate so-called a carbon monoxide shift reaction forming a hydrogen gas and a carbon dioxide (shown in Chemical formula 2). The generated gas (the anode gas) is discharged to the fuel cell device 43. The anode gas includes hydrogen, carbon monoxide, carbon dioxide, water vapor, natural gas (methane gas) that is not reformed, and reform water (water vapor) not used for reforming. The water vapor reforming reaction corresponds to an endothermic reaction, and the carbon monoxide shift reaction corresponds to an exothermic reaction.

(Chemical formula 1) CH₄ + H₂O → CO + 3H₂

(Chemical formula 2) CO + H₂O → CO₂ + H₂

As shown in Fig. 3, the evaporation portion 41 and the reforming portion 42 are contained in a housing 80 integrally formed in a U-shape when viewed in a plan view. The housing 80 is made of metal, for example, carbon steel or alloy steel. The housing 80 is formed in a cross-sectional rectangular shape having a void inside the housing 80. The housing 80 is defined by a first chamber 81 and a second chamber 82. The first and second chambers 81, 82 are disposed in series in the aforementioned order and are defined so as to flow gaseous material. The first chamber 81 includes the evaporation portion 41 and the second chamber 82 includes the reforming portion 42.

As shown in Figs. 2 and 4, the fuel cell device 43 includes plural fuel cells 43a (hereinafter, for clarity, the fuel cells 43a are described in singular form except for special cases) and a manifold 43b. The fuel cell 43a generates an electric power by the anode gas and the cathode gas. The fuel cell 43a corresponds to a solid oxide fuel cell. The cathode gas corresponds to air. The fuel cell 43a is provided on the manifold 43b. The manifold 43b is supplied with anode gas discharged from the reforming portion 42 via the reforming gas supply pipe 46.

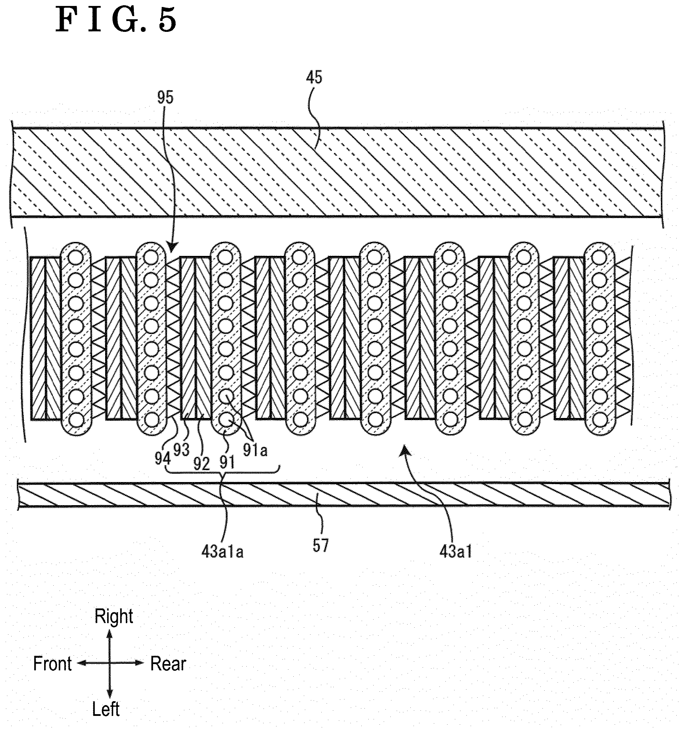

As shown in Figs. 1, 2, and 4, the fuel cell 43a includes a cell stack 43a1. As shown in Fig. 4, the fuel cell 43a includes two cell stacks 43a1. As shown in Fig. 5, the cell stack 43a1 is formed such that plural cells 43a1a (hereinafter, for clarity, the cells 43a1a are described in singular form except for special cases) are stacked with one another along the front-rear direction (the first direction). The cell 43a1a includes a fuel electrode 91, an electrolyte 92, an air electrode 93, and an inter connector 94. Each of the fuel electrode 91, the electrolyte 92, and the air electrode 93 is formed in a plate shape. The longitudinal direction of the cross sections of the fuel electrode 91, the electrolyte 92, and the air electrode 93 corresponds to a right-left direction. The fuel electrode 91, the electrolyte 92, and the air electrode 93 are disposed so that the longitudinal direction of the fuel electrode 91, the electrolyte 92, and the air electrode 93 is along the upper-lower direction (the second direction). The fuel electrode 91, the electrolyte 92, and the air electrode 93 are stacked with one another in the aforementioned order. In other words, the electrolyte 92 is sandwiched by the fuel electrode 91 and the air electrode 93.

The fuel electrode 91 is made of a porous ceramic. The inside of the fuel cathode 91 of the fuel cell 43a includes plural anode gas flow passages 91a in the right-left direction, the plural anode gas flow passages 91a provided along the upper-lower direction (the second direction, the longitudinal direction). A lower end (i.e., serving as a first end) of the anode gas flow passage 91a is connected to a fuel outlet of the manifold 43b. The anode gas is introduced from the lower end (the first end) of the anode gas flow passage 91a. The anode gas flows from the lower end (the first end) to an upper end (i.e., serving as a second end) of the anode gas flow passage 91a, and is discharged from the upper end (the second end) of the anode gas flow passage 91a.

According to the example, a zirconium oxide serving as a type of the solid oxide is used as the electrolyte 92. A clearance between the air electrode 93 and the fuel electrode 91 of the cell 43a1a, the air electrode 93 and the fuel electrode 91 that are adjacent to each other, includes a cathode gas flow passage 95. That is, the plural cathode gas flow passages 95 are provided inside the fuel cell 43a. The cathode gas supplied from an outlet 57c that is disposed at the lower end of a cathode gas introduction member 57 is introduced from the lower end (the first end) of the cathode gas flow passage 95 and is discharged from the upper end (the second end) of the cathode gas flow passage 95. Here, the cathode gas is supplied to the air electrode 93.

The interconnector 94 is disposed between the air electrode 93 and the fuel electrode 91 (within the cathode gas flow passage 95) so as to connect the air electrode 93 to the fuel electrode 91. The interconnector 94 collects an electric power generated by the cell 43a1a.

The cell 43a1a of the fuel cell 43a generates the electric power by the anode gas supplied to the fuel electrode 91 and the cathode gas supplied to the air electrode 93. That is, the electrochemical reactions presented by a chemical formula 3 and a chemical formula 4 occur at the fuel electrode 91, and the electrochemical reaction presented by a chemical formula 5 occurs at the air electrode 93. That is, oxide ion (O²⁻) generated at the air electrode 93 passes through the electrolyte 92 and reacts with the hydrogen at the fuel electrode 91, and thereby generating electric energy. Accordingly, the anode gas and the cathode gas, which were not used for the power generation, are discharged upward of the fuel cell 43a from the upper end of the anode gas flow passage 91a and the upper end of the cathode gas flow passage 95. An operation temperature level of cell 43a1a of the fuel cell 43a is approximately 400 degrees Celsius, or 400 °C to 1000 °C.

(Chemical formula 3) H₂ + O²⁻ → H₂O + 2e⁻

(Chemical formula 4) CO + O²⁻ → CO₂ + 2e⁻

(Chemical formula 5) 1/2O₂ + 2e⁻ → O²⁻

The anode gas (anode off-gas), which was not used for the power generation and which was discharged from the upper end of the anode gas flow passage 91a is combusted at the combustion space R by the cathode gas (cathode off-gas), which was not used for the power generation. As shown in Figs. 1 and 2, the evaporation portion 41 and the reforming portion 42 are heated by the combustion gas (flames 44a). Furthermore, the combustion gas heats the power generation portion 40 up to the operation temperature. As such, the combustion space R corresponds to the combustion portion 44 that heats the evaporation portion 41 and the reforming portion 42 by combusting the anode off-gas sent from the fuel cell 43a and the cathode off-gas sent from the fuel cell 43a.

The combustion portion 44 (the combustion space R) combusts a flammable gas and an oxidant gas. The flammable gas is flammable and corresponds to the reforming fuel, the anode off-gas, and the carbon monoxide. That is, the combustion portion 44 combusts the anode off-gas discharged from the fuel cell 43a. The combustion portion 44 combusts the anode off-gas and generates flue gas that includes a high temperature level and a water vapor. The water vapor corresponds to a water vapor (see Chemical formula 3) that is included by the anode off-gas and that is generated by the fuel cell 43a. The flue gas flows in the first gas flow passage 60.

The insulating member 45 insulates the fuel cell 43a from outside of the fuel cell 43a (and the heat generation portion 40 or the fuel cell module 30). The insulating material 45 is made from an insulating material, for example, the porous ceramic material including high heat resistant properties. The insulating member 45 is formed in a cross sectional U shape (see Fig. 1) opening upwardly. That is, as shown in Fig. 1, the insulating member 45 includes a pair of wall members, a first wall member 45a and a second wall member 45b, and a bottom plate member 45c. The first wall member 45a and the second wall member 45b are disposed so as to face with each other. The bottom plate member 45c is disposed so as to connect the respective lower ends of the first and second wall members 45a, 45b. The evaporation portion 41, the reforming portion 42, and the fuel cell device 43 are disposed inside the insulating member 45. The bottom plate member 45c of the insulating member 45 is in contact with a bottom surface of the fuel cell device 43. The cathode gas introduction member 57 is provided at a first side of the fuel cell 43a. The first and second wall members 45a, 45b of the insulating member 45 are spaced apart from a second side of the fuel cell 43a (the cell 43a1a), the second side that is opposite to the first side.

An exterior 50 includes a first cylindrical member 51, a second cylindrical member 52, a first lid member 53, a second lid member 54, a first communicating pipe member 55, and a second communicating pipe member 56. The first cylindrical member 51, the second cylindrical member 52, the first lid member 53, the second lid member 54, the first communicating pipe member 55, and the second communicating pipe member 56 are made of metal, for example, carbon steel or alloy steel. The first cylindrical member 51, the second cylindrical member 52, the first lid member 53, the second lid member 54, the first communicating pipe member 55, and the second communicating pipe member 56 are formed by pressing or welding.

The first cylindrical member 51 is formed in a cylindrical shape and is disposed so as to surround the power generation portion 40. Specifically, the first cylindrical member 51 includes a peripheral wall 51a formed in a substantially square cross-sectional shape and opening portions 51b that are disposed at opposing ends of the peripheral wall 51a. An inner surface of the peripheral wall 51a faces an outer wall surface of the power generation portion 40 so as to include a first space S1 between the peripheral wall 51a and the power generation portion 40.

The exterior 50 further includes the cathode gas introduction member 57 (see Fig. 1). The cathode gas introduction member 57 is formed in a cylindrical shape and is disposed so as to extend downward from an upper wall 51d of the peripheral wall 51a. The cathode gas introduction member 57 is spaced apart from the fuel cell 43a in one direction of the right direction and the left direction of the fuel cell 43a. The cathode gas introduction member 57 includes the cylindrical portion 57a, an inlet 57b and the outlet 57c. An upper end portion of the cylindrical portion 57a is air-tightly connected to a long hole 51c being provided at the upper wall 51d of the first cylindrical member 51. The inlet 57b allows an outer surface of the peripheral wall 51a of the first cylindrical member 51 to communicate with an inner surface of a peripheral wall 52a of the second cylindrical member 52 (a second space S2). The outlet 57c of the cathode gas introduction member 57 opens to the lower end (the first end) of the cell 43a1a at a lower end portion of cylindrical portion 57a.

The second cylindrical member 52 is formed in a cylindrical shape and is disposed so as to surround the first cylindrical member 51. Specifically, the second cylindrical member 52 includes the peripheral wall 52a formed in a substantially square cross-sectional shape and opening portions 52b that are disposed at opposing ends of the peripheral wall 52a. The inner surface of the peripheral wall 52a faces the outer surface of the peripheral wall 51a of the first cylindrical member 51 so as to include the second space S2 between the peripheral wall 52a and the first cylindrical member 51.

The first lid member 53 is provided so as to block a first portion (the front in the example) of the opening portions 51b of the first cylindrical member 51, and a first portion of the opening portions 52b of the second cylindrical member 52. The first lid member 53 is air-tightly attached to the first portion of the opening portions 51b of the first cylindrical member 51 and the first portion of the opening portions 52b of the second cylindrical member 52. The second lid member 54 is provided so as to block a second portion (the rear in the example) of the opening portions 51b of the first cylindrical member 51, and a second portion of the opening portion 52b of the second cylindrical member 52. The second lid member 54 is air-tightly attached to the second portion of the first opening portions 51b of the first cylindrical member 51 and the second portion of the opening portions 52b of the second cylindrical member 52.

As shown in Figs. 1 and 2, the first communicating pipe member 55 is formed in a pipe shape and includes a discharge hole 55a at an inner side of the first communicating pipe member 55. The upper opening end portion of the first communicating pipe member 55 is air-tightly attached (for example, caulked joint) to the first and second cylindrical members 51, 52 so as to penetrate the first and second cylindrical members 51, 52 to communicate with the first gas flow passage 60. The lower opening end portion of the first communicating pipe member 55 is connected to an exhaust pipe 11d.

The second communicating pipe member 56 is formed in a pipe shape (see Fig. 2). An upper opening end portion of the second communicating pipe member 56 is air-tightly attached (for example, caulked joint) to the second cylindrical member 52 to penetrate the second cylindrical member 52 to communicate with the second gas flow passage 70. A lower opening end portion of the second communicating pipe member 56 is connected to the cathode gas supply pipe 11c.

The first gas flow passage 60 (the first space S1) is provided between a set of the first and second wall members 45a, 45b of the insulating member 45 and the inner surface of the peripheral wall 51a of the first cylindrical member 51 and serves as a combustion exhaust gas flow passage sending the combustion exhaust gas. As shown in Fig. 1, the second gas flow passage 70 is provided between the outer surface of the peripheral wall 51a of the first cylindrical member 51 and the inner surface of the peripheral wall 52a of the second cylindrical member 52 (the second space S2), and sends the cathode gas. That is, the second gas flow passage 70 corresponds to a cathode gas flow passage. The cathode gas is supplied to the second communicating pipe member 56 via the cathode gas supply pipe 11c by the cathode gas blower 11c1. As shown in dashed-line arrows in Fig. 1, the cathode gas is supplied to the lower end portion of the cell 43a1a via the second gas flow passage 70 that communicates with the second communicating pipe member 56 and the cathode gas introduction member 57.

The cathode gas flowing in the second gas flow passage 70 is heat exchanged and is heated by the peripheral wall 51a being provided between the first gas flow passage 60 and the second gas flow passage 70. That is, the combustion exhaust gas flows in the first gas flow passage 60 that is disposed at the inner side of the peripheral wall 51a. The peripheral wall 51a is heated by the combustion exhaust gas. The cathode gas flowing in the second gas flow passage 70 that is disposed at the outer side of the heated peripheral wall 51a is heat exchanged and preheated by the peripheral wall 51a. According to the example, the cathode gas is preheated at 600 to 700 °C.

A first flow passage F1 communicating with the cathode gas flow passage 95 is disposed between the set of the first and second wall members 45a, 45b of the insulating member 45 and the cell 43a1a. A first closing member 71 closing the lower end of the first flow passage F1 is provided at the lower end of the first flow passage F1, that is, a portion between the respective lower ends of the first and second wall members 45a, 45b of the insulating member 45 and the manifold 43b. A second flow passage F2 communicating with the cathode gas flow passage 95 is provided between the cathode gas introduction member 57 and the cell 43a1a. A second closing member 72 closing a lower position of the second flow passage F2 is provided at the lower position of the second flow passage F2, specifically, at an upper position of the second flow passage F2 relative to the outlet 57c.

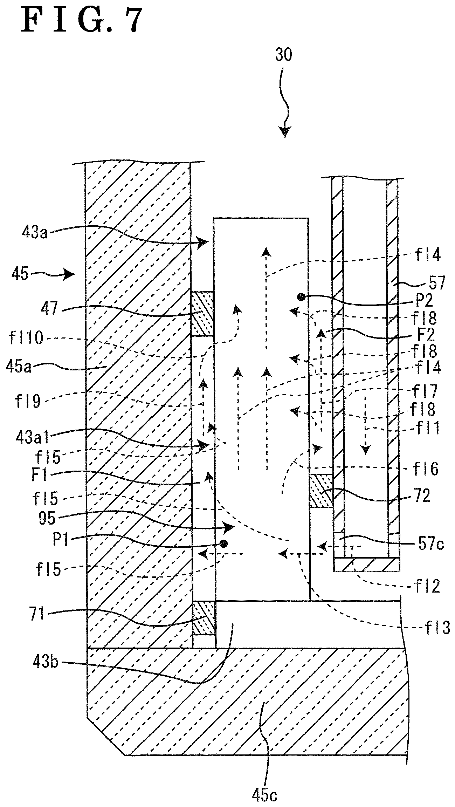

A flowing state of the cathode gas within the fuel cell module 30 will hereunder be explained with reference to Fig. 7. Fig. 7 is a lateral cross sectional view illustrating the cathode gas flow passage 95 of the fuel cell module 30. For convenience, the interconnector 94 is not illustrated in Fig. 7. The cathode gas flows from upward to downward within the cathode gas introduction member 57 (a first flow Fl1 in Fig. 7) and flows from the outlet 57c that is disposed at the lower end of the cathode gas introduction member 57 toward the lower end portion of the cell 43a1a (a second flow Fl2 in Fig. 7). The cathode gas flowing from the outlet 57c is blocked from flowing upward within the second flow passage F2 by the second closing member 72, and flows in the cathode gas flow passage 95 of the cell 43a1a (a third flow Fl3 in Fig. 7). The cathode gas flowing in the cathode gas flow passage 95 of the cell 43a1a flows from downward to upward of the cathode gas flow passage 95 (a fourth flow fl4 in Fig. 7). At this time, as described above, the electric power is generated at the cell 43a1a by the anode gas supplied to the fuel electrode 91 and the cathode gas supplied to the air electrode 93.

Here, the reason that the first flow passage F1 is provided between the set of the first and second wall members 45a, 45b of the insulating member 45 and the fuel cell 43a that are spaced from each other, will be explained. In a case where the first and second wall members 45a, 45b of the insulating member 45 are closely contacted with the fuel cell 43a without being spaced apart from the fuel cell 43a, the cathode gas in the cathode gas flow passage 95 is blocked from flowing to the first and second wall members 45a, 45b (a fifth flow fl5 in Fig. 7). Accordingly, the cathode gas is not supplied to a first position P1 of the fuel cell 43a, the first position P1 that is adjacent to the first and second wall members 45a, 45b, and the electric power is not generated at the first position P1. To prevent this, the set of the first and second wall members 45a, 45b of the insulating member 45 and the fuel cell 43a are spaced apart from each other, and the cathode gas flows from the lower end (the first end) to the upper end (the second end) of the first flow passage F1 (the fifth flow fl5 in Fig. 7) so that the electric power is generated at the first position P1 of the fuel cell 43a, the first position P1 that is adjacent to the first and second wall members 45a, 45b.

Similarly, the cathode gas introduction member 57 and the fuel cell 43a are spaced apart from each other to include the second flow passage F2 therebetween. Accordingly, the cathode gas flows from the cathode gas flow passage 95 to the second flow passage F2 (a sixth flow fl6 in Fig. 7), and flows from downward to upward at the second flow passage F2 (a seventh flow fl7 in Fig.7). The cathode gas flows from the second flow passage F2 to the cathode gas introduction passage 95 of the cell 43a1a (an eighth flow fl8 in Fig. 7), and the electric power is generated at a second position P2 of the cell 43a1a, the second position P2 that is adjacent to the cathode gas introduction member 57.

The fuel cell 43a is heated in accordance with the power generation. The temperature level of the fuel cell 43a increases from downward to upward except for the upper end portion (a second end portion) of the fuel cell 43a. This is because the cathode gas is heated at the fuel cell 43a and the temperature level of the cathode gas gradually increases, and an upper portion of the fuel cell 43a is prevented from being cooled. The upper portion of the fuel cell 43a receives heat from the flames 44a that are provided at the combustion space R, and the temperature level of the upper position of the fuel cell 43a increases.

The temperature level of the cathode gas introduction member 57 is lower than the temperature level of the cell 43a1a. Accordingly, a radiant heat radiated from the cell 43a1a is absorbed by the cathode gas introduction member 57. The cathode air flowing from upward to downward within the cathode gas introduction member 57 receives the radiant heat radiated from the cell 43a1a, and the temperature level of the cathode air within the cathode gas introduction member 57, the cathode air flowing at a lower position is higher than the cathode air flowing at a higher position. Thus, the temperature level of a lower position of the cathode gas introduction member 57 is higher than the temperature level of the upper position of the cathode gas introduction member 57. In other words, the temperature level of the upper position of the cathode gas introduction member 57 is lower than the temperature level of the lower position of the cathode gas introduction member 57. Accordingly, the lower position (a first position) of the cathode gas introduction member 57 absorbs the radiant heat radiated from the cell 43a1a less than the upper portion (a second position) of the cathode gas introduction member 57. In other words, the upper portion (the second position) of the cathode gas introduction member 57 absorbs the radiant heat radiated from the cell 43a1a more than the lower position (the first position) of the cathode gas introduction member 57. Thus, the temperature level of the upper end portion of the cell 43a1a is reduced by the heat radiation of the cell 43a1a comparing to the temperature level of the lower portion of the cell 43a1a. Accordingly, the temperature level of the cell 43a1a is the highest at a portion adjacent to a lower position of the upper end portion of the cell 43a1a.

As shown in Figs. 1, 6, and 7, a flow block member 47 (i.e., serving as a first flow block member) is provided at an upper position of the first flow passage F1 that is disposed between the cell 43a1a (the fuel cell 43a) and the set of the first and second wall members 45a, 45b of the insulating member 45. The flow block member 47 blocks the cathode gas flowing in the first flow passage F1. The flow block member 47 is formed in a longitudinal block shape.

The flow block member 47 is provided at a side where the upper end (the second end) of the first flow passage F1 is provided relative to an intermediate position of the first flow passage F1 in the upper-lower direction (the second direction). That is, the flow block member 47 is provided at the upper position of the fuel cell 43a relative to an intermediate position of the fuel cell 43a. The flow block member 47 is disposed at a position downward from the upper end of the fuel cell 43a by a predetermined distance, that is, a position adjacent to the lower position of the upper end portion of the fuel cell 43a. That is, as described above, the flow block member 47 is disposed at a position adjacent to a lower position of the upper end portion of the cell 43a1 a where the temperature level of the cell 43a1a comes to be the highest. The flow block member 47 is disposed at an upper position (the second position) relative to the second closing member 72.

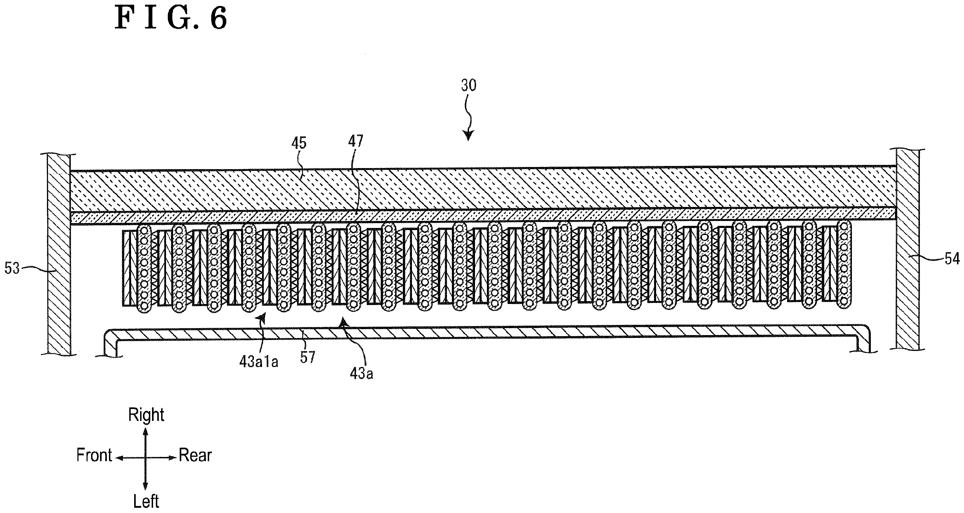

As shown in Fig. 6, the flow block member 47 is provided over a whole length of the fuel cell 43a in the front-rear direction (the first direction). According to the example, the flow block member 47 corresponds to a flocculent member made of fiber including heat resistant properties and insulation properties. The thickness of the flow block member 47 in the upper-lower direction (the second direction) is set at a thickness in which the cathode gas does not pass through.

The flow block member 47 is closely in contact with the cell 43a1a and the first and second wall members 45a, 45b of the insulating member 45. Being sandwiched and pressurized by the set of the first and second wall members 45a, 45b of the insulating member 45 and the cell 43a1a, the flow block member 47 is fixed therebetween.

The cathode gas (a ninth flow fl9 in Fig. 7) flowing in the first flow passage F1 flows in the upper position of the cathode gas flow passage 95 from the upper position of the first flow passage F1 via the flow block member 47 (a tenth flow fl10 in Fig. 7). Being not heated by the cell 43a1a, the temperature level of the cathode gas flowing in the first flow passage F1 (the ninth flow fl9 in Fig. 7) is lower than the cathode gas flowing in the cathode gas flow passage 95. Thus, the upper position of the fuel cell 43a is cooled by the cathode gas (the tenth flow fl10 in Fig. 7) flowing in the upper position of the cathode gas flow passage 95 from the upper position of the first flow passage F1. Accordingly, the temperature level of the upper portion of the fuel cell 43a is prevented from increasing higher than the temperature level of the lower portion of the fuel cell 43a. Thus, comparing to a case where the flow block member 47 is not provided, the temperature level of the cell 43a1 a comes to be uniform in the upper-lower direction.

As described above, the flow block member 47 is provided at a position adjacent to the lower position of the upper end portion of the fuel cell 43a, the lower position where the temperature level of the fuel cell 43a comes to be the highest. Accordingly, the fuel cell 43a that is disposed at the position where the temperature level of the fuel cell 43a comes to be the highest is cooled by the cathode gas (the tenth flow fl10 in Fig. 7) flowing in the cathode gas flow passage 95 from the first flow passage F1, and the temperature level of the fuel cell 43a comes to be further securely uniform in the upper-lower direction.

According to the example, the following effects and advantages may be attained. As is clear from the aforementioned explanation, the fuel cell module 30 includes the flow block member 47 that is disposed at the upper portion (the second end portion) of the cell 43a1a relative to the intermediate position of the cell 43a1a in the upper-lower direction (the second direction) of the fuel cell 43a within the first flow passage F1. Accordingly, the cathode gas flowing in the first flow passage F1 flows in the upper end portion (the second end portion) of the cathode gas flow passage 95 via the flow block member 47 (the tenth flow fl10 in Fig. 7). Thus, the upper end portion (the second end portion) of the fuel cell 43a is cooled by the cathode gas that flows in the first flow passage F1 and that has the temperature level lower than the temperature level of the cathode gas flowing in the cathode gas flow passage 95. Accordingly, because the temperature level of the upper end portion (the second end portion) of the fuel cell 43a is prevented from increasing higher than the lower end portion (the first end portion) of the fuel cell 43a, the durability of the fuel cell 43a may be enhanced.

Because the temperature level of the fuel cell 43a in the upper-lower direction (the second direction) comes to be uniform, an average temperature level of the fuel cell 43a when the fuel cell 43a is in operation may increase while maintaining the durability of the fuel cell 43a. As a result, the power generation efficiency of the fuel cell 43a may be enhanced.

The flow block member 47 is the flocculent member being made of fiber including the heat resistant properties. As such, being the flocculent member being made of fiber including the heat resistant properties, the flow block member 47 includes flexibility. Thus, the flow block member 47 made of fiber may closely come in contact with the first and second wall members 45a, 45b of the insulating member 45 and the cell 43a1a. Accordingly, the cathode gas (the ninth flow fl9 in Fig. 7) flowing in the first flow passage F1 that is disposed between the set of the first and second wall member 45a, 45b of the insulating member 45 and the cell 43a1a may securely flow in the cathode gas flow passage 95 of an upper portion of the cell stack 43a1 via the flow clock member 47. As a result, the upper position of the fuel cell 43a may be securely cooled, and the temperature level of the upper portion of the fuel cell 43a may be securely prevented from increasing higher than the lower portion of the fuel cell 43a. Furthermore, the cell 43a1a may be prevented from having flaws when the fuel cell module 30 is assembled.

The flow block member 47 is provided over the whole length of the fuel cell 43a in the front-rear direction (the first direction). Accordingly, the temperature level of the cell 43a1a in the upper-lower direction, the cells 43a1a that are stacked with one another, comes to be uniform. As a result, the cell 43a1 a is prevented from exceeding a heat resistant temperature at a specific part of the cell 43a1a. The average temperature level of the fuel cell 43a when the fuel cell 43a is in operation may increase while maintaining the durability of the fuel cell 43a. As a result, the power generation efficiency of the fuel cell 43a may be enhanced.

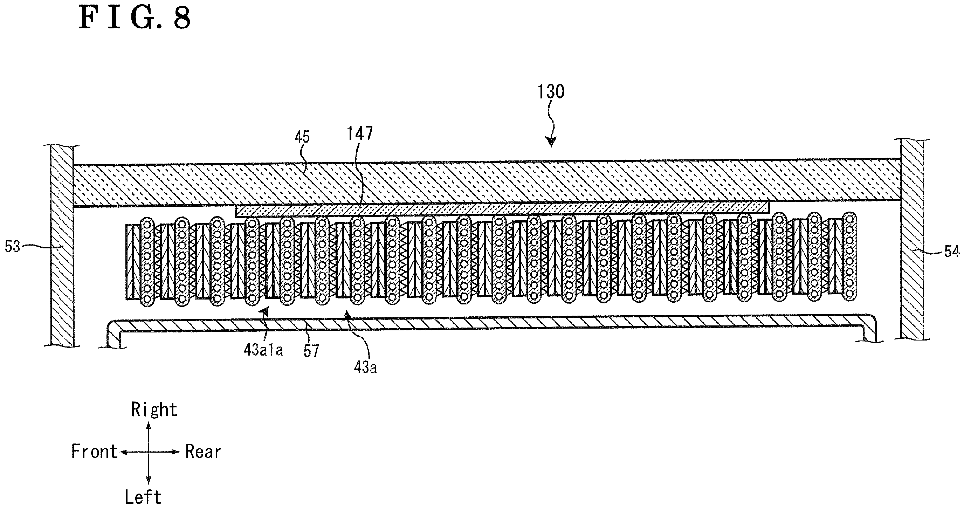

A fuel cell module 130 of an embodiment will hereunder be explained with reference to Fig. 8. As shown in Fig. 8, the fuel cell module 130 of the embodiment is provided between the cell 43a1a and the set of the first and second wall members 45a, 45b of the insulating member 45, the cell 43a1a that has a predetermined range from an intermediate position of the cell 43a1a in the front-rear direction among all the cells 43a1a stacked with one another in the front-rear direction (the first direction). In other words, according to the fuel cell module 130 of the embodiment, a flow block member 147 is provided over the whole length of the intermediate portion of the fuel cell 43a other than the opposing end portions of the fuel cell 43a in the first direction.

Because respective outer surfaces of the first and second lid members 53, 54 are in contact with an external air (an external air of the fuel cell module 130), the first and second lid members 53, 54 are cooled by the external air. As a result, a temperature level of a space between the first and second lid members 53, 54 (the inside of the first cylindrical member 51) decreases towards the first and second lid members 53, 54. Accordingly, the temperature level of the opposing ends of the cell 43a1 a decreases lower than the intermediate position of the cell 43a1a in the front-rear direction. In other words, the temperature level of the intermediate position of the cell 43a1a increases higher than the opposing ends of the cell 43a1a.

As mentioned above, according to the fuel cell module 130 in the embodiment, the flow block member 147 is provided over the whole length of the intermediate portion of the fuel cell 43a other than the opposing end portions of the fuel cell 43a. Accordingly, as described above, the temperature level of the upper portion of the cell 43a1 a disposed in the intermediate position of the cell 43a1a in the front-rear direction (the first direction), the intermediate position including the temperature level higher than the opposing end portions of the fuel cell 43a, is prevented from increasing by the flow block member 147. As described above, because the temperature level of the opposing ends of the cell 43a1a is lower than the intermediate position of the cell 43a1a in the front-rear direction, the temperature level of the cell 43a1 a in the front-rear direction comes to be uniform. Thus, the temperature level of the cell 43a1 a is prevented from exceeding the heat resistant temperature at a specific part of the cell 43a1a, and the average temperature level of the fuel cell 43a that is in operation may increase while maintaining the durability of the fuel cell 43a. As a result, the power generation efficiency of the fuel cell 43a may be enhanced.

According to the embodiment, being sandwiched and compressed by the set of the first and second wall members 45a, 45b of the insulating member 45 and the cell 43a1a, the flow block member 147 is fixed therebetween. Alternatively, the flow block member 147 may be mounted on the first and second wall members 45a, 45b of the insulating member 45 to be fixed between the set of the first and second wall members 45a, 45b of the insulating member 45 and the cell 43a1a.

According to the aforementioned example and the embodiment, the flow block member 47, 147 is made of ceramic fiber. Alternatively, the flow block member 47, 147 may be made from a material including heat resistant properties and the insulating properties, for example, ceramic block. Alternatively, the flow block member 47, 147 may be integrally formed with the first and second wall members 45a, 45b of the insulating member 45. According to the example and the embodiment, the flow block member 47, 147 is closely in contact with the cell 43a1a and the set of the first and second wall members 45a, 45b of the insulating member 45. Alternatively, the flow block member 47, 147 may be provided at the first and second wall members 45a, 45b of the insulating member 45 so as to face the cell 43a1a, and may be spaced apart from the cell 43a1a.

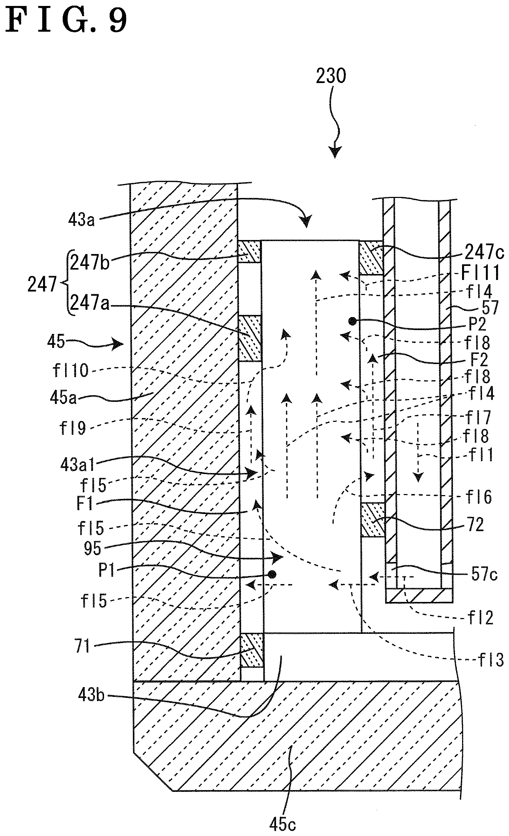

Another example will hereunder be explained. As shown in Fig. 9, plural flow block members (i.e., serving as a first flow block member) that are a first flow block member 247a and a second flow block member 247b may be provided in the upper-lower direction (the second direction). As shown in Fig. 9, a flow block member 247 includes the first and second flow block members 247a, 247b. The first flow block member 247a is provided at a lower position of the upper end portion of the cell 43a1a. The second flow block member 247b is disposed at the upper end portion of the cell 43a1a.

As shown in Fig. 9, a third flow block member 247c (i.e., serving as a second flow block member) blocking the second flow passage F2 may be provided at the upper end (the second end) of the second flow passage F2. According to another example, the cathode gas (the seventh flow fl7 in Fig. 9) flowing in the second flow passage F2 flows in the upper position of the cathode gas flow passage 95 via the third flow block member 247c (an eleventh flow fl11 in Fig. 7). Accordingly, the upper position (the second end portion) of the fuel cell 43a is cooled by the cathode gas (the seventh flow fl7 in Fig. 9) that flows in the second flow passage F2 and that has the temperature level lower than the temperature level of the cathode gas flowing in the cathode gas flow passage 95. Thus, the temperature level of the upper end portion (the second end portion) of the fuel cell 43a is prevented from increasing higher than the temperature level of the lower portion (the first end portion) of the fuel cell 43a. As a result, temperature level of the fuel cell 43a in the upper-lower direction (the second direction) comes to be uniform.

According to the embodiment, the first flow passage F1 and the cathode gas flow passage 95 are communicated with each other over the whole length of the first flow passage F1. Alternatively, only the upper position and the lower position of the flow passage F1 may be communicated with the cathode gas flow passage 95.

## Claims

1. A fuel cell module (130; 230), comprising:
a fuel cell (43a) including a plurality of cells (43a1a) that are stacked with one another in a first direction, the fuel cell (43a) being formed with an anode gas flow passage (91a) at an inner portion of the fuel cell (43a), the anode gas flow passage (91a) sending an anode gas from a first end of the anode gas flow passage (91a) to a second end of the anode gas flow passage (91a) in a second direction that is orthogonal to the first direction, the fuel cell (43a) being formed with a cathode gas flow passage (95) at the inner portion of the fuel cell (43a), the cathode gas flow passage (95) sending a cathode gas from the first end to the second end, the fuel cell (43a) generating an electric power by the anode gas and the cathode gas;
a cathode gas introduction member (57) being provided at a first side of the fuel cell (43a), the cathode gas introduction member (57) including an outlet (57c) opening towards the first end of the fuel cell (43a), the cathode gas introduction member (57) sending the cathode gas from the outlet (57c) to the cathode gas flow passage (95);
a wall member (45a, 45b) being provided at a second side of the fuel cell (43a), the wall member (45a, 45b) being spaced apart from the fuel cell (43a);
a first flow passage (F1) being formed between the fuel cell (43a) and the wall member (45a, 45b), the first flow passage (F1) communicating with the cathode gas flow passage (95), the first flow passage (F1) sending the cathode gas from the first end to the second end; and
a first flow block member (147; 247a) being provided within the first flow passage (F1), the first flow block member (147; 247a) being provided at the second end relative to an intermediate position of the first flow passage (F1) in the second direction, the first flow block member (147; 247a) blocking the cathode gas flowing in the first flow passage (F1),
**characterized in that**
the first flow block member (147; 247a) is provided over a whole length of an intermediate portion of the fuel cell (43a) other than opposing end portions of the fuel cell (43a) in the first direction.

2. The fuel cell module (130; 230) according to claim 1, wherein the first flow block member (147; 247a) is made from a flocculent member being made of fiber including heat resistant properties.

3. The fuel cell module (230) according to either claim 1 or 2, further comprising:
a second flow passage (F2) being formed between the fuel cell (43a) and the cathode gas introduction member (57), the second flow passage (F2) communicating with the cathode gas flow passage (95), the second flow passage (F2) sending the cathode gas from the first end to the second end; and
a second flow block member (247c) being provided within the second flow passage (F2) at the second end of the second flow passage (F2) in the second direction, the second flow block member (247c) blocking the cathode gas flowing in the second flow passage (F2).

4. The fuel cell module (230) according to claim 3, wherein the second flow block member (247c) is made from a flocculent member being made of fiber including heat resistant properties.

5. The fuel cell module (230) according to either claim 3 or 4, wherein the second flow block member (247c) is provided over a whole length of an intermediate portion of the fuel cell (43a) other than opposing end portions of the fuel cell (43a) in the first direction.

## Patentansprüche

1. Brennstoffzellenmodul (130; 230) mit:
einer Brennstoffzelle (43a), die eine Vielzahl von Zellen (43a1a) aufweist, die in einer ersten Richtung zusammengestapelt sind, wobei die Brennstoffzelle (43a) an einem inneren Abschnitt der Brennstoffzelle (43a) mit einem Anodengas-Strömungskanal (91a) ausgebildet ist, der Anodengas-Strömungskanal (91a) ein Anodengas von einem ersten Ende des Anodengas-Strömungskanals (91a) in einer zweiten Richtung, die senkrecht zur ersten Richtung ist, zu einem zweiten Ende des Anodengas-Strömungskanals (91a) schickt, die Brennstoffzelle (43a) am inneren Abschnitt der Brennstoffzelle (43a) mit einem Kathodengas-Strömungskanal (95) ausgebildet ist, der Kathodengas-Strömungskanal (95) ein Kathodengas vom ersten Ende zum zweiten Ende schickt und die Brennstoffzelle (43a) durch das Anodengas und das Kathodengas einen elektrischen Strom erzeugt;
einem Kathodengas-Einleitungsbauteil (57), das auf einer ersten Seite der Brennstoffzelle (43a) vorgesehen ist, wobei das Kathodengas-Einleitungsbauteil (57) einen Auslass (57c) aufweist, der sich zum ersten Ende der Brennstoffzelle (43a) hin öffnet, und das Kathodengas-Einleitungsbauteil (57) das Kathodengas vom Auslass (57c) zum Kathodengas-Strömungskanal (95) schickt;
einem Wandbauteil (45a, 45b), das auf einer zweiten Seite der Brennstoffzelle (43a) vorgesehen ist, wobei das Wandbauteil (45a, 45b) von der Brennstoffzelle (43a) beabstandet ist;
einem ersten Strömungskanal (F1), der zwischen der Brennstoffzelle (43a) und dem Wandbauteil (45a, 45b) ausgebildet ist, wobei der erste Strömungskanal (F1) mit dem Kathodengas-Strömungskanal (95) in Verbindung steht und der erste Strömungskanal (F1) das Kathodengas vom ersten Ende zum zweiten Ende schickt; und
einem ersten Strömungsblockierbauteil (147; 247a), das innerhalb des ersten Strömungskanals (F1) vorgesehen ist, wobei das erste Strömungsblockierbauteil (147; 247a) bezüglich einer mittleren Position des ersten Strömungskanals (F1) am in der zweiten Richtung zweiten Ende vorgesehen ist und das erste Strömungsblockierbauteil (147; 247a) das im ersten Strömungskanal (F1) strömende Kathodengas blockiert,
**dadurch gekennzeichnet, dass**
das erste Strömungsblockierbauteil (147; 247a) in der ersten Richtung über eine gesamte Länge eines mittleren Abschnitts der Brennstoffzelle (43a) ausgenommen entgegengesetzter Endabschnitte der Brennstoffzelle (43a) vorgesehen ist.

2. Brennstoffzellenmodul (130; 230) nach Anspruch 1, wobei das erste Strömungsblockierbauteil (147; 247a) aus einem flockigen Bauteil besteht, das aus Fasern besteht, die Hitzebeständigkeitseigenschaften aufweisen.

3. Brennstoffzellenmodul (230) nach entweder Anspruch 1 oder 2, mit zudem:
einem zweiten Strömungskanal (F2), der zwischen der Brennstoffzelle (43a) und dem Kathodengas-Einleitungsbauteil (57) ausgebildet ist, wobei der zweite Strömungskanal (F2) mit dem Kathodengas-Strömungskanal (95) in Verbindung steht und der zweite Strömungskanal (F2) das Kathodengas vom ersten Ende zum zweiten Ende schickt; und
einem zweiten Strömungsblockierbauteil (247c), das innerhalb des zweiten Strömungskanals (F2) am in der zweiten Richtung zweiten Ende des zweiten Strömungskanals (F2) vorgesehen ist, wobei das zweite Strömungsblockierbauteil (247c) das im zweiten Strömungskanal (F2) strömende Kathodengas blockiert.

4. Brennstoffzellenmodul (230) nach Anspruch 3, wobei das zweite Strömungsblockierbauteil (247c) aus einem flockigen Bauteil besteht, das aus Fasern besteht, die Hitzebeständigkeitseigenschaften aufweisen.

5. Brennstoffzellenmodul (230) nach entweder Anspruch 3 oder 4, wobei das zweite Strömungsblockierbauteil (247c) in der ersten Richtung über eine gesamte Länge eines mittleren Abschnitts der Brennstoffzelle (43a) ausgenommen entgegengesetzter Endabschnitte der Brennstoffzelle (43a) vorgesehen ist.

## Revendications

1. Module de pile à combustible (130 ; 230) comprenant :
une pile à combustible (43a) comprenant une pluralité de piles (43a1a) qui sont empilées les unes sur les autres dans une première direction, la pile à combustible (43a) étant formée avec un passage d'écoulement de gaz anodique (91a) au niveau d'une partie interne de la pile à combustible (43a), le passage d'écoulement de gaz anodique (91a) envoyant un gaz anodique d'une première extrémité du passage d'écoulement de gaz anodique (91a) à une seconde extrémité du passage d'écoulement de gaz anodique (91a) dans une seconde direction qui est orthogonale à la première direction, la pile à combustible (43a) étant formée avec un passage d'écoulement de gaz cathodique (95) au niveau de la partie interne de la pile à combustible (43a), le passage d'écoulement de gaz cathodique (95) envoyant un gaz cathodique de la première extrémité à la seconde extrémité, la pile à combustible (43a) générant une énergie électrique par le gaz anodique et le gaz cathodique ;
un élément d'introduction de gaz cathodique (57) qui est prévu au niveau d'un premier côté de la pile à combustible (43a), l'élément d'introduction de gaz cathodique (57) comprenant une sortie (57c) s'ouvrant vers la première extrémité de la pile à combustible (43a), l'élément d'introduction de gaz cathodique (57) envoyant le gaz cathodique de la sortie (57c) au passage d'écoulement de gaz cathodique (95) ;
un élément de paroi (45a, 45b) qui est prévu au niveau d'un second côté de la pile à combustible (43a), l'élément de paroi (45a, 45b) étant espacé de la pile à combustible (43a) ;
un premier passage d'écoulement (F1) étant formé entre la pile à combustible (43a) et l'élément de paroi (45a, 45b), le premier passage d'écoulement (F1) communiquant avec le passage d'écoulement de gaz cathodique (95), le premier passage d'écoulement (F1) envoyant le gaz cathodique de la première extrémité à la seconde extrémité ; et
un premier élément de blocage d'écoulement (147 ; 247a) étant prévu à l'intérieur du premier passage d'écoulement (F1), le premier élément de blocage d'écoulement (147 ; 247a) étant prévu au niveau d'une seconde extrémité par rapport à une position intermédiaire du premier passage d'écoulement (F1) dans la seconde direction, le premier élément de blocage d'écoulement (147 ; 247a) empêchant le gaz cathodique de s'écouler dans le premier passage d'écoulement (F1),
**caractérisé en ce que** :
le premier élément de blocage d'écoulement (147 ; 247a) est prévu sur toute une longueur d'une partie intermédiaire de la pile à combustible (43a) différente des parties d'extrémité opposées de la pile à combustible (43a) dans la première direction.

2. Module de pile à combustible (130 ; 230) selon la revendication 1, dans lequel le premier élément de blocage d'écoulement (147 ; 247a) est réalisé avec un élément floculent qui est réalisé à partir de fibres comprenant des propriétés de résistance à la chaleur.

3. Module de pile à combustible (230) selon la revendication 1 ou 2, comprenant en outre :
un second passage d'écoulement (F2) qui est formé entre la pile à combustible (43a) et l'élément d'introduction de gaz cathodique (57), le second passage d'écoulement (F2) communiquant avec le passage d'écoulement de gaz cathodique (95), le second passage d'écoulement (F2) envoyant le gaz cathodique de la première extrémité à la seconde extrémité ; et
un second élément de blocage d'écoulement (247c) qui est prévu à l'intérieur du second passage d'écoulement (F2) au niveau de la seconde extrémité du second passage d'écoulement (F2) dans la seconde direction, le second élément de blocage d'écoulement (247c) empêchant le gaz cathodique de s'écouler dans le second passage d'écoulement (F2).

4. Module de pile à combustible (230) selon la revendication 3, dans lequel le second élément de blocage d'écoulement (247c) est réalisé avec un élément floculent qui est réalisé à partir de fibres comprenant des propriétés de résistance à la chaleur.

5. Module de pile à combustible (230) selon la revendication 3 ou 4, dans lequel le second élément de blocage d'écoulement (247c) est prévu sur toute une longueur d'une partie intermédiaire de la pile à combustible (43a) différente des parties d'extrémité opposées de la pile à combustible (43a) dans la première direction.
